# EUROPÄISCHE PATENTSCHRIFT

(11) **EP 1 173 798 B1**
(45) Veröffentlichungstag und Bekanntmachung des Hinweises auf die Patenterteilung: **21.06.2006**
(21) Anmeldenummer: 00936695.6
(22) Anmeldetag: 13.04.2000
(51) Int. Cl.: G04G 7/02

(54) **METHODE UND VORRICHTUNG ZUM ZWEI-WEG FREQUENZVERGLEICH ÜBER SATELLIT MITTELS TRÄGERPHASE**
METHOD AND DEVICE FOR SATELLITE DUAL FREQUENCY COMPARISON USING A CARRIER PHASE
PROCEDE ET DISPOSITIF DE COMPARAISON BIDIRECTIONNELLE DE FREQUENCE PAR SATELLITE A L'AIDE D'UNE PHASE PORTEUSE

(30) Priorität: 13.04.1999 DE 19916520
(43) Veröffentlichungstag der Anmeldung: 23.01.2002
(73) Patentinhaber: Schäfer, Wolfgang, 71254 Ditzingen (DE)
(72) Erfinder: Schäfer, Wolfgang, 71254 Ditzingen (DE)
(74) Vertreter: Gleiss, Alf-Olav
(86) Internationale Anmeldenummer: PCT/EP2000/003341
(87) Internationale Veröffentlichungsnummer: WO 2000/062133

(56) Entgegenhaltungen:
- US-A- 3 751 900
- DETOMA E ET AL: "THE SIRIO-1 TIMING EXPERIMENT" ALTA FREQUENZA, Bd. 51, Nr. 5, 1. September 1982 (1982-09-01), Seiten 263-274, XP002011485 milano
- GUREVICH E L: "SIGNALS FOR TRANSMISSION OF TIME SCALES THROUGH SATELLITE COMMUNICATIONS CHANNELS" MEASUREMENT TECHNIQUES,US,CONSULTANTS BUREAU. NEW YORK, Bd. 36, Nr. 2, 1. Februar 1993 (1993-02-01), Seiten 180-183, XP000404346 New York ISSN: 0543-1972
- KIRCHNER D: "TWO-WAY TIME TRANSFER VIA COMMUNICATION SATELLITES" PROCEEDINGS OF THE IEEE,US,IEEE. NEW YORK, Bd. 79, Nr. 7, 1. Juli 1991 (1991-07-01), Seiten 983-990, XP000264855 ISSN: 0018-9219 in der Anmeldung erwähnt

## Beschreibung

Hochgenaue Uhrenvergleiche zum Beispiel zwischen nationalen, für die Darstellung der Zeit zuständigen Behörden, werden nach dem sogenannten TWSTFT (Two-Way Satellite Time and Frequency Transfer) Verfahren durchgeführt (Kirchner 1991). Dieses Verfahren zeichnet sich dadurch aus, daß durch Differenzbildung simultaner Messungen Fehler durch unbekannte Elemente des Signalweges in hohem Maße unterdrückt werden.

Der Vorteil dieses Verfahrens liegt in der prinzipiell bedingten Unabhängigkeit von der Satellitenposition und von Fehlern durch den Signal-Übertragungsweg. Er kann direkt aus der Symmetrie des Verfahrens abgeleitet werden. Da beide Partner einer Verbindung sowohl eine Sende- als auch Empfangseinrichtung benötigen, blieb die Anwendung des Verfahrens allerdingsauf wenige, nationale Behörden beschränkt (D, UK, F, OE, USA, JA, IT, ES, NL).

Die zunehmende Verfügbarkeit kleiner, kostengünstiger Satelliten-Bodenstationen mit Sendeeinrichtung läßt die systembedingten Nachteile heute immer mehr in den Hintergrund rücken. Es liegt daher auch aus kommerzieller Sicht nahe, das seit Jahren erprobte Verfahren weiter zu verfeinern. Alleine in Europa arbeiten etwa 5 nationale Institute an hochgenauen Cs-Atomuhren (Ghezali) die etwa 2 Größenordnungen genauer als derzeit verfügbare Frequenz-Vergleichsverfahren sind.

Aus der Patentschrift US 3,751,900 ist ein Verfahren zum Zwei-Weg Frequenzvergleich über Satellit bekannt, in welchem der Gangunterschied aufgrund der Frequenzdifferenz zweier bodengebundener Uhren über eine bidirektionale Satellitenverbindung mittels Trägerphase bestimmt wird. Es ist eine Vorrichtung zum Zwei-Weg Frequenzvergleich über Satellit bekannt, in der beide Uhren jeweils über eine Sende- und Empfangsanlage, genannt Bodenstation, für Satellitensignale verfügen, von beiden Bodenstationen Satellitensignale ausgesandt und empfangen werden und die Satellitensignale in beiden Kommunikationsrichtungen am Satelliten mit derselben, aber zum Nutz-Signal nicht-kohärenten Lokal-Oszillatorfrequenz umgesetzt werden. Als Messsignal für den Frequenzvergleich wird die Phase der Hochfrequenzträger der Satellitensignale verwendet . Die beschriebene passive Methode und die entsprechende Vorrichtung können zur Synchronisation von Zeitsystemen, atomischen oder präzisen Ohren genutzt werden.

Aus der Veröffentlichung "The Sirio-1 Timing Experiment", Alta Frequenza, Band 51, Nr. 5, September/Oktober 1982, Seiten 263 bis 274, XP 002011485, Mailand von Detoma, E. et al. ist ein Zeit-Synchronisationsexperiment mit einem Satelliten bekannt, bei dem die Synchronisation zwischen zwei Bodenstationen ausgeführt wird. Jede Bodenstation empfängt zusätzlich zu dem Signal, welches von der anderen Bodenstation übertragen worden ist, ihr eigenes Signal, welches von dem Satelliten zurück zur Erde übertragen wird. Es wird eine fixierte Synchronisationssequenz eingesetzt. Iterative Techniken werden eingesetzt um die relativistischen Effekte, die aus der Erdurndrehung resultieren (Sagnac-Effekt) und aus der Nicht-Austauschbarkeit des Hin- und des Rückweges resultieren, zu kompensieren.

Aus der Veröffentlichung "Signals for Transmission of Time Scales through Satellite Communication Channels", Measurement Techniques, US, Consultings Bureau, New York, Band 36, Nr. 2, Februar 1993, Seiten 180 bis 183, XP 00404346, ISSN 0543-1972, von Gurevich, E. L. sind Methoden zum Vergleich von Zeitskalen bekannt. Eine bekannte Methode ist die Duplex-Methode zur Synchronisation. Diese Methode umfasst grundsätzlich den Austausch von synchronisierenden Pulsen zwischen Punkten, an denen die zu vergleichenden Uhren durch einen Satelliten-Kommunikationskanal installiert sind. Im Ergebnis kann die Verzögerung des empfangenen Zeitskalen-Signals an jedem Punkt relativ zu einer lokalen Zeitskala gemessen werden und der Unterschied in den Skalen der verglichenen Punkte kann berechnet werden. Die Genauigkeit des Vergleichs ist primär von dem Messfehler abhängig, welcher von der Form des Signals, das für die Zeitskalen-Transmission eingesetzt wird, von der Methode der Signalverarbeitung, von den Methoden für die Zeitintervallmessung und der Energie-Charakteristik des Kommunikationskanals abhängt. Die Ergebnisse von statistischen Funktechniken, insbesondere der Radar-Theorie, werden eingesetzt, um den Effekt der Form des Synchronisationssignals und der Energie-Charakteristik des Kommunikationskanals auf die Genauigkeit der Zeitskalen-Transmission durch einen Satellitenkommunikationskanal zu bestimmen. Da die Phase des durch einen Satellitenkommunikationskanal übertragenen Signals willkürlich ist und daher nicht als Informationsparameter betrachtet werden kann, wird auf Methoden aus der Wahrscheinlichkeitstheorie zurückgegriffen.

Im Bereich hochgenauer GPS- und GLONASS-Anwendungen sind in den vergangenen Jahren verschiedene Verfahren entwickelt worden, die unter Ausnutzung der Trägerphasenmessung eine erhebliche Genauigkeitssteigerung gegenüber reinen PN-Code-Phasen-Messungen erzielen. (Bedrich)

Im Gegensatz zu den GPS/GLONASS-Verfahren befindet sich im Signalweg zwischen den beiden beteiligten TWSTFT Bodenstationen im Normalfall ein Satellitentransponder mit nicht-kohärenter Frequenzumsetzung. Da beim traditionellem TWSTFT-Verfahren die Gruppenlaufzeit der hochfrequenten Signale anhand einer geeigneten Modulation (Ton oder Pseudo-Noise-Codes oder verwandte Verfahren) gemessen wird, ist das traditionelle TWSTFT-Verfahren tolerant gegenüber einer Frequenzumsetzuing des Signalträgers im Satelliten-Transponder.

Die Trägerphase der am Satelliten umgesetzten Signale wird jedoch direkt von Phase, Frequenz und Frequenzstabilität des satellitenseitigen Lokal-Oszillators bestimmt. Da die Phase dieses Oszillators bisher nicht direkt einer Messung zugänglich schien, wurden die mit großem Erfolg für Einwegverfahren entwickelte Trägerphasenmessungen hoher Genauigkeit bisher nicht auf das TWSTFT Verfahren übertragen.

Es sind zwar Verfahren bekannt, die durch spezielle Einrichtungen am Satelliten (Surfsat) Fehler durch den satellitenseitigen Lokaloszillator eliminieren. Dies erfordert allerdings eine spezielle Konstruktion des Satellitentransponders bzw geeignete Zusatzeinrichtungen, die aus Gründen des Aufwandes, der Komplexität and der Kosten bei normalen Kommunikationssatelliten nicht vorhanden sind. Deep-Space Raumsonden leiten das Sendesignal kohärent direkt aus dem Empfangssignal ab. Dies ist eine weitere Methode um den Lokaloszillator zu bestimmen, die allerdings nur für eine einzige Empfangsfrequenz geeignet. Ein ähnliches Verfahren wird beim PRARE-Verfahren (Bedrich) in der kohärenten Bodenstation angewandt.

Das hier vorgestellte Verfahren kommt ohne derartige aufwendige Zusatzeinrichtungen am Satelliten aus. Es erweitert das bisherige TWSTFT Verfahren und erhöht dessen erzielbare Frequenz-Transfer-Genauigkeit um etwa 2 bis 3 Größenordnungen. Die Anzahl der Nutzsignale wird durch das Verfahren nicht limitiert.

Der Einfluß des Lokaloszillators an Bord alleine würde schon durch das Zwei-Weg Verfahren eliminiert werden. Dies gilt jedoch nur für die speziellen - unrealistischen - Fälle daß entweder der Satellit in absolut fixer Position zu den relativ zu den Bodenstationen steht oder daß sich beide beteiligten Bodenstationen am gleichen Punkt auf der Erdoberfläche befinden.

Im realen Betrieb sind verschiedene Relativgeschwindigkeiten zu den beteiligten Bodenstationen zu berücksichtigen, die a-priori unbekannt sind. Diese unbekannten Geschwindigkeiten bewirken unbekannte Dopplerverschiebungen der am Satelliten empfangenen und ausgesandten - unbekannten - Trägerfrequenzen der Signale. Eine weiter Unbekannte ergibt sich dadurch, daß die aktuelle die Frequenz des Lokaloszillators ebenfalls unbekannt ist.

Es sind also vier Unbekannte zu bestimmen, darunter die gesuchte Frequenzdifferenz zwischen beiden Uhren. Zur Lösung werden bei dem hier vorgestellten Verfahren die folgenden vier voneinander unabhängigen Messungen durchgeführt:
1. An Station 1 die Trägerphase des von Station 2 über den Transponder ausgesandten Signales
2. An Station 1 die Trägerphase des eigenen Sendesignales empfangen nach Umsetzung durch den Transponder
3. An Station 2 die Trägerphase des von Station 1 über den Transponder ausgesandten Signales
4. An Station 2 die Trägerphase des eigenen Sendesignales empfangen nach Umsetzung durch den Transponder

Das Verfahren weist zwei wesentliche Neuerungen auf:
1. Gegenüber den traditionellen Verfahren der Gruppenlaufzeitmessung anhand modulierter Hochfrequenzsignale wird die Trägephase ausgewertet. Dies ist gleichbedeutend mit einer potentiellen Genauigkeitssteigerung im Verhältnis Trägerfrequenz zu Modulationsfrequenz. Im Mikrowellenbereich (Ku-Band) liegt dieses Verhältnis typischerweise zwischen 100 und 1000.
2. Zur Eliminierung des unbekannten Einflusses des bordseitigen Lokal-Oszillators und des Einflusses durch die unbekannte Satellitenbewegung wird jede Bodenstation mit einem zweiten Empfangskanal ausgerüstet, der das eigene Sendesignal nach Umsetzung durch den nicht-kohärenten Satelliten-Transponder empfängt.

Damit entstehen vier simultane Messungen zur Lösung von 4 Unbekannten. Darunter ist die gesuchte Frequenzdifferenz zwischen den beiden bodenseitigen Uhren.

Für den Nutzer ergeben sich aus dem Verfahren folgende Vorteile:
1. Die Meßgenauigkeit und die Präzision des Verfahrens liegt um Größenordnungen über dem traditionellen TWSTFT Verfahren mittels Code-Phase.
2. An Bord des Satelliten sind keine dedizierten Einrichtungen notwendig
3. Standard-Satellitentransponder für Telekommunikation oder von direktstrahlenden Fernsehsatelliten lassen sich unverändert verwenden.
4. Die zur Erzielung einer gewünschten Genauigkeit notwendige Meßdauer wird deutlich verkürzt.
5. Aufgrund der kurzen Meßzeiten läßt sich nicht nur die Langzeitstabilität der Uhren, sondern auch deren Kurzzeitstabilität bestimmen.
6. Bei gegebener Meßzeit ist die Meßempfindlichkeit zur Detektion von Instabilitäten in den Uhren deutlich höher.

Das System gewährleistet unter Ausnutzung des eingeführten Meßverfahrens nach dem 2-Wegeprinzip eine hohe Unabhängigkeit von der Satellitenposition. Es arbeitet ohne Kenntnis der Ausbreitungszeit längs des Übertragungsweges.

Aufgabe der Erfindung ist daher ein Verfahren und eine Vorrichtung zum Zwei-Weg Frequenzvergleich über Satellit mittels Trägerphase.

Diese Aufgabe wird durch ein Verfahren mit den Merkmalen des Anspruchs 1 und mit einer Vorrichtung des Anspruchs 11 gelöst.

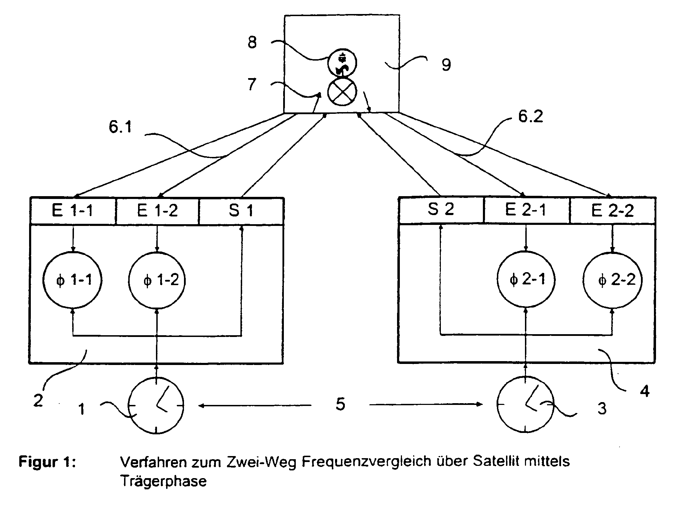

Die Erfindung wird mit Bezug auf Figur 1 näher beschrieben. Figur 1 zeigt einen Frequenzvergleiche zwischen zwei am Erdboden befindlichen Uhren (1) und (3) über einen Satelliten (9). Beide Uhren befinden sich an Bodenstationen (2) und (4), die über eine bidirektionale Satellitenfunkstrecke (6.1 und 6.2) miteinander verbunden sind. Beide Stationen senden mitteles eine Sendeeinrichtung (S1 bzw S2) geeignete Signale aus, die jeweils kohärent zur lokalen Uhr erzegt werden. Jede Station besitzt jeweils eine Empfangseinrichtung zum Empfang des eigenen Signales (E1-1 und E2-2) und eine Empfangseinrichtung zum Empfang des Signales der Gegenstation (E 1.2 und E2-1). Die Phasen der empfangenen eigenen Signale werden mittel einer geeigneten Schaltung (φ 1-1 bzw φ 2-2) gegenüber der jeweils lokalen Uhr verglichen. Ebenso werden die Phasen der empfangenen Signale der jeweiligen Gegenstation mittels einer geeigneten Schaltung (φ 1-2 bzw φ 2-1) gegenüber der jeweils lokalen Uhr verglichen.

Das Auswerteverfahren eliminiert den Einfluss des - unbekannten - satellitenseitigen Lokaloszillators (8), der die Frequenzumsetzung im Satellitentransponder (7) bewirkt. Im Ergebnis wird die Frequenzdifferenz (5) der Uhren ermittelt.

## Patentansprüche

1. Verfahren zum Ermitteln von Frequenzdifferenzen zwischen zwei Uhren, denen jeweils eine Sender-/Empfängereinheit zugeordnet ist, wobei die Sender-/Empfängereinheiten mittels eines Satelliten Signale zueinander senden und voneinander empfangen und wobei die Sender-/Empfängereinheiten jeweils die eigenen, zum Satelliten gesendeten und von diesem zurückgesendeten Signale empfangen, **dadurch gekennzeichnet, dass** jeweils die Trägerphase der empfangenen Signale gemessen wird.

2. Verfahren nach Anspruch 1, **dadurch gekennzeichnet, dass** an Bord des Satelliten keine Zusatzeinrichtungen für die Nutzung dieses Verfahrens notwendig sind.

3. Verfahren nach Anspruch 1 oder 2, **dadurch gekennzeichnet, dass** keine Informationen über die tatsächliche Frequenz und/oder Phase des satellitenseitigen Lokal-Oszillators bekannt sein müsste.

4. Verfahren nach einem der vorhergehenden Ansprüche, **dadurch gekennzeichnet, dass** nach Eliminierung der Fehler durch die bodenseitigen Uhren und durch die Satellitengeschwindigkeit die Frequenz des satellitenseitigen Lokal-Oszillator bestimmt wird.

5. Verfahren nach einem der vorhergehenden Ansprüche, **dadurch gekennzeichnet, dass** die bodengebundenen Uhren mithilfe der Messergebnisse synchronisiert werden.

6. Verfahren nach einem der vorhergehenden Ansprüche, **dadurch gekennzeichnet, dass** beide Bodenstation über ein Frequenzmultiplexverfahren (FDMA) in Verbindung stehen.

7. Verfahren nach einem der vorhergehenden Ansprüche, **dadurch gekennzeichnet, dass** beide Bodenstation über ein Codemultiplexverfahren (CDMA) in Verbindung stehen.

8. Verfahren nach einem der vorhergehenden Ansprüche, **dadurch gekennzeichnet,** die beide Bodenstation über ein zeitmultiplexverfahren (TDMA) in Verbindung stehen.

9. Verfahren nach einem der vorhergehenden Ansprüche, **dadurch gekennzeichnet, dass** mehrere Bodenstationen mittels eines geeigneten Multiplexverfahren über denselben Transponder simultan in Verbindung stehen.

10. Verfahren nach einem der vorhergehenden Ansprüche, **dadurch gekennzeichnet, dass** Bodenstationen über verschiedene Transponder an Bord desselben Satelliten in Verbindung stehen.

11. Vorrichtung, insbesondere zur Durchführung des Verfahrens nach Anspruch 1, mit zwei Sender-/Empfängereinheiten, die jeweils einer Uhr zugeordnet und zum gegenseitigen Signalaustausch mit einem Satelliten verbunden sind, und die jeweils einen zusätzlichen Empfangskanal zum Empfangen der eigenen, zum Satelliten gesendeten und von diesem zurückgesendeten Signale enthalten, **dadurch gekennzeichnet, dass** die jeweilige Sender-/Empfängereinheit eine Messeinrichtung zum Messen der Trägerphase der empfangenen Signale aufweist.

## Claims

1. Method for determining differences in frequency between two clocks to each of which a transmitter/receiver unit is assigned, whereby the transmitter/receiver units transmit and receive signals to and from each other, respectively, by means of a satellite and whereby the transmitter/receiver units each receive their own signals transmitted to and returned by the satellite, **characterized in that** in each case the carrier phase of the received signals is measured.

2. Method according to claim 1, **characterized in that** no additional facilities on board of the satellite are needed for the utilization of this method.

3. Method according to claim 1 or 2, **characterized in that** no information concerning the actual frequency and/or phase of the satellite-side local oscillator would need to be known.

4. Method according to anyone of the preceding claims, **characterized in that** the frequency of the satellite-side local oscillator is determined after elimination of the errors due to the earth-side clocks and the satellite velocity.

5. Method according to anyone of the preceding claims, **characterized in that** the earth-fixed clocks are synchronized by means of the measuring results.

6. Method according to anyone of the preceding claims, **characterized in that** both earth stations are connected by means of a frequency multiplex procedure (FDMA).

7. Method according to anyone of the preceding claims, **characterized in that** both earth stations are connected by means of a code multiplex procedure (CDMA).

8. Method according to anyone of the preceding claims, **characterized in that** both earth stations are connected by means of a time multiplex procedure (TDMA).

9. Method according to anyone of the preceding claims, **characterized in that** multiple earth stations are simultaneously connected via the same transponder by means of a suitable multiplex procedure.

10. Method according to anyone of the preceding claims, **characterized in that** earth stations are connected via different transponders on board of the same satellite.

11. Device, in particular for carrying out the method according to claim 1, with two transmitter/receiver units each of which is assigned to a clock and which are connected to a satellite for a mutual exchange of signals, and which each contain an additional reception channel for receiving their own signals that were transmitted to and returned by the satellite, **characterized in that** the respective transmitter/receiver unit comprises a measuring unit for measuring the carrier phase of the received signals.

## Revendications

1. Procédé en vue de la détermination de différences de fréquences entre deux horloges auxquelles est associé à chaque fois un module émetteur/récepteur, les modules émetteur/récepteur envoyant les uns vers les autres et recevant les uns des autres des signaux au moyen d'un satellite et les modules émetteur/récepteur recevant à chaque fois les signaux propres envoyés vers le satellite et renvoyés par celui-ci, **caractérisé en ce que** la phase porteuse des signaux reçus est à chaque fois mesurée.

2. Procédé selon la revendication 1, **caractérisé en ce qu'**aucun dispositif supplémentaire pour l'exploitation de ce procédé n'est nécessaire à bord du satellite.

3. Procédé selon la revendication 1 ou 2, **caractérisé en ce qu'**aucune information sur la fréquence et/ou phase réelle de l'oscillateur local côté satellite ne doit être connue.

4. Procédé selon l'une quelconque des revendications précédentes, **caractérisé en ce que** la fréquence de l'oscillateur local côté satellite est déterminée après élimination des erreurs par les horloges côté sol et par la vitesse du satellite.

5. Procédé selon l'une quelconque des revendications précédentes, **caractérisé en ce que** les horloges côté sol sont synchronisées à l'aide des résultats de mesure.

6. Procédé selon l'une quelconque des revendications précédentes, **caractérisé en ce que** les deux stations au sol sont connectées par l'intermédiaire d'un procédé d'accès multiple par répartition en fréquence (FDMA).

7. Procédé selon l'une quelconque des revendications précédentes, **caractérisé en ce que** les deux stations au sol sont connectées par l'intermédiaire d'un procédé d'accès multiple par répartition en code (CDMA).

8. Procédé selon l'une quelconque des revendications précédentes, **caractérisé en ce que** les deux stations au sol sont connectées par l'intermédiaire d'un procédé d'accès multiple par répartition dans le temps (TDMA).

9. Procédé selon l'une quelconque des revendications précédentes, **caractérisé en ce que** plusieurs stations au sol sont connectées simultanément au moyen d'un procédé d'accès multiple approprié par l'intermédiaire du même transpondeur.

10. Procédé selon l'une quelconque des revendications précédentes, **caractérisé en ce que** les stations au sol sont connectées par l'intermédiaire de différents transpondeurs à bord du même satellite.

11. Dispositif, notamment en vue de la réalisation du procédé selon la revendication 1, avec deux modules émetteur/récepteur qui sont chacun associés à une horloge et sont reliés à un satellite en vue de l'échange réciproque de signaux, et qui contiennent chacun un canal de réception supplémentaire en vue de la réception des signaux propres envoyés vers le satellite et renvoyés par celui-ci, **caractérisé en ce que** le module émetteur/récepteur respectif présente un dispositif de mesure en vue de mesurer la phase porteuse des signaux reçus.
